(19) **Europäisches Patentamt / European Patent Office / Office européen des brevets**

(11) **EP 2 313 266 B1**

(12) **FASCICULE DE BREVET EUROPEEN**

(45) Date de publication et mention de la délivrance du brevet:
**23.03.2022 Bulletin 2022/12**

(21) Numéro de dépôt: **09772401.7**

(22) Date de dépôt: **29.06.2009**

(51) Classification Internationale des Brevets (IPC):
**B32B 15/04** *(2006.01)*  **B32B 15/06** *(2006.01)*
**B32B 15/20** *(2006.01)*

(52) Classification Coopérative des Brevets (CPC):
**B32B 5/18; B32B 7/12; B32B 15/046; B32B 15/08; B32B 15/20; F16F 7/121;** B32B 2266/06; B32B 2307/558; B32B 2307/72

(86) Numéro de dépôt international:
**PCT/EP2009/058119**

(87) Numéro de publication internationale:
**WO 2010/000701 (07.01.2010 Gazette 2010/01)**

(54) **DISPOSITIF DE PROTECTION DE STRUCTURES COMPOSITES CONTRE LES IMPACTS**

VERFAHREN ZUM SCHUTZ VON VERBUNDSTRUKTUREN GEGEN AUFPRALL

METHOD FOR PROTECTING COMPOSITE STRUCTURES AGAINST IMPACTS

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **04.07.2008 FR 0854568**

(43) Date de publication de la demande:
**27.04.2011 Bulletin 2011/17**

(73) Titulaire: **ArianeGroup SAS**
**78130 Les Mureaux (FR)**

(72) Inventeurs:
• **DESMARS, Bruno**
**33160 Saint Aubin Du Medoc (FR)**
• **BERARD, Sylvain**
**F-13250 Saint Charas (FR)**

(74) Mandataire: **Brevalex**
**95, rue d'Amsterdam**
**75378 Paris Cedex 8 (FR)**

(56) Documents cités:
**EP-A- 0 730 951    FR-A- 2 785 224**
**FR-A- 2 869 565    US-A1- 2006 090 636**

• **DATABASE WPI Week 199318 Thomson Scientific, London, GB; AN 1993-148938 XP002509752 & JP 05 085573 A (NITTO DENKO CORP) 6 avril 1993 (1993-04-06)**

**Description**

La présente invention porte sur un dispositif de protection de structures notamment en matériaux composites contre les impacts.

Une telle protection est importante pour de tels matériaux car les dégâts tels que les délaminages causés par les impacts sur les structures en matériaux composites ne se voient pas facilement.

Le dispositif de protection objet de la présente invention dépend de chaque application, car en fait le comportement d'un matériau composite vis à vis des impacts dépend de sa nature physico-chimique, de ses propriétés mécaniques intrinsèques et de sa géométrie.

L'invention permet pour chaque application de trouver une solution optimale en termes de protection aux impacts et de masse de la protection.

Le document FR 2 861 847 traite du comportement des matériaux au impacts, et de la détection de ces impacts.

Les impacts considérés dans ce document sont des impacts à basse énergie et basse vitesse, que l'on rencontre usuellement dans la pratique industrielle : la chute d'un objet tel qu'un marteau par exemple sur une structure est l'exemple typique de tels impacts.

Ces impacts sont dits à basse énergie et basse vitesse car l'énergie des objets qui heurtent la structure est inférieure à la centaine de joules et la vitesse inférieure à 5m/s, en opposition aux impacts à haute énergie comme ceux dus à des projectiles d'armes à feu où l'unité est au moins le kilojoule.

Du point de vue phénomènes physiques, ces impacts sont très différents :

les impacts à basse énergie correspondent à des phénomènes quasi statiques, comme ceux rencontrés dans des essais de traction/compression classiques. Ces impacts peuvent induire des déformations des matériaux et leur dégradation par exemple par création de délaminages (décohésion) entre les différentes couches de fibres des matériaux composites.

Les impacts à haute énergie mettent en œuvre des effets d'ondes de chocs, et peuvent conduire à des éclatements ou des perçages de matériaux.

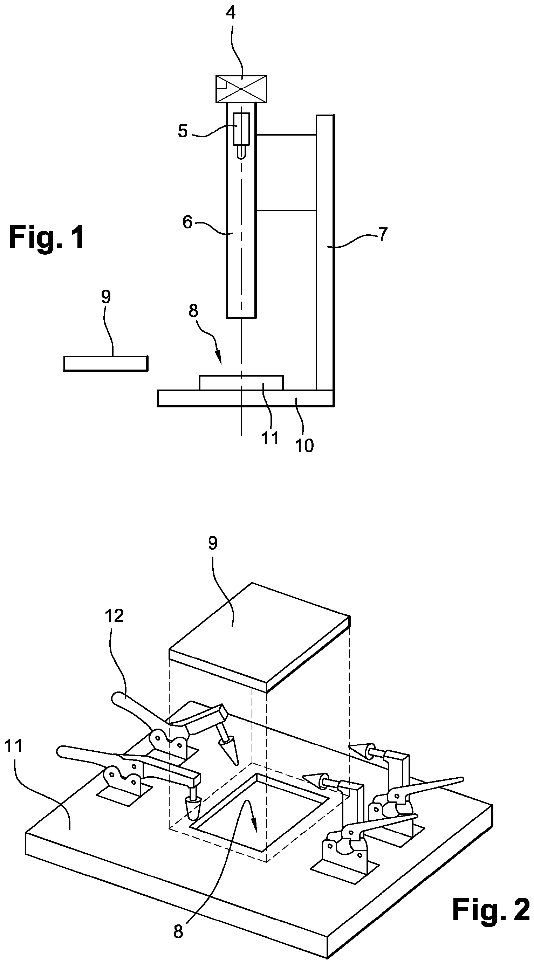

Les essais d'impact pour les impacts à basse énergie sur des éprouvettes ont été standardisés dans la norme AITM 1.0010. Les essais sont réalisés sur des plaques de 150*100 mm avec le moyen d'impact dont le principe est décrit sur la figure 1.

Le support de l'éprouvette est décrit en figure 2 représentant un moyen et une éprouvette d'impact au sens de la norme AITM

La hauteur de chute et la masse de l'impacteur permettent de définir l'énergie de l'impact que l'on souhaite appliquer.

Les conséquences de l'impact sont déterminées par contrôle aux ultrasons du matériau après essai, ce qui met en évidence les défauts et en particulier les délaminages des matériaux composites dus aux impacts.

Il est connu que les structures composites en particulier à base de fibre carbone sont sensibles aux impacts comme les chutes d'outils, les impacts en service ou autres, à la fois à cause des dégâts qu'ils induisent mais aussi parce que ces impacts ne sont pas toujours détectables.

Cette sensibilité conduit à mettre en place des mesures de protections lors de la fabrication ou de l'intégration de ces structures, voire en service. C'est une opération plus délicate qu'il ne semblerait car la problématique est complexe du fait que, les protections doivent effectivement protéger de l'impact, c'est à dire empêcher la dégradation du substrat qu'elles protègent, elles doivent permettre de détecter l'occurrence d'un impact et elles doivent être compatibles avec leur mise en œuvre sur des pièces réelles, et donc d'une part compatible avec des géométries complexe, d'autre part être éventuellement pourvues de systèmes de fixation simples et amovibles.

En outre, de telles protections doivent être le plus légères possible notamment lorsqu'elles restent à demeure sur les pièces à protéger du fait que comme de façon générale l'intérêt de l'utilisation des matériaux composites est de réaliser des pièces particulièrement légères, il s'agit de ne pas faire disparaître cet intérêt par un surcroît de masse.

Ceci est particulièrement important dans les domaines aéronautique et spatial pour lesquels les grandes dimensions des pièces composites réalisées imposent de minimiser la masse des protections afin de simplifier les opérations de montage/démontage.

Les solutions mise en place à ce jour comme la couverture de pièces par des matériaux cellulaires souples disposé et mis en forme directement sur les structures sont très peu efficaces en terme d'impact de type chute d'outils. La mise en place de ces solutions n'est pas toujours simple sur des structures de grandes dimensions comme par exemple des réservoirs où la réalisation de systèmes d'accroché est problématique en fond de réservoir.

Des protections à base de matériaux cellulaires beaucoup plus denses qui conduisent à une meilleure efficacité existent mais elles présentent les inconvénients d'être raides et très fragiles, ce qui les rend peu propices à leur emploi en production de série.

Il existe aussi des protections thermiques externes en matériau Norcoatliège, Norcoat étant la marque commerciale d'un produit de la société ASTRIUM qui sont collée sur différentes structures composites. Ces protections présentent en outre de bonnes propriétés en terme de résistance aux impacts mais présentent l'inconvénient d'être relativement raides ; ce qui les rend peu aptes à une fonction de protection antichoc amovible réutilisable, donc non collée, toujours d'un point de vue fabrication de série.

Un seul produit du commerce a finalement été identifié comme ayant un potentiel industriel intéressant :

il est constitué d'une famille d'élastomères viscoélastiques à très fort pouvoir amortissant commercialisé sous la marque SMACTANE par la société française SMAC et d'une feuille d'aluminium et présente une efficacité excellente dans le domaine des impacts concerné puisqu'il permet un décalage des premiers dommages supérieur à 80J.

Toutefois, la densité et la raideur importantes de ce produit sont un frein à son emploi sur des structures de grandes dimensions ou aux rayons de courbure faibles (problème de la compatibilité de la protection mécanique avec la géométrie de la pièce à protéger).

Dans le cadre de la protection de structures on connaît aussi le document FR 2 869 871 qui décrit de recouvrir des chants de structures composites à plis superposés par des couvre chants eu U afin de protéger les chants de telles pièces contre les impacts dans la gamme 35-90 joules et de révéler la présence des impacts.

Pour réaliser les couvre chants, ce document décrit d'utiliser une mousse de matière plastique à cellules fermées, donc une mousse raide, que l'on peut recouvrir d'un film protecteur en verre ou en poly-para-phénylène téréphtalamide connu sous la marque Kevlar.

Une mousse raide convient pour l'application visée, car des chants ont en général une géométrie simple.

Par contre une telle mousse ne s'adapte pas à des surfaces complexes, car elle n'est pas déformable.

Le document FR 2 869 565 décrit de protéger, soit en permanence soit ponctuellement, une pièce comportant un noyau principal de type monolithique ou sandwich par un revêtement superficiel complexe d'un élastomère revêtu d'une couche protectrice rigide d'un matériau métallique, composite organique ou éventuellement mixte métallique/composite rigide.

La structure décrite à base d'élastomère reste massive et l'élasticité de l'élastomère rend difficile la détection des impacts.

Le document FR 2 771 331 concerne la même problématique appliquée à des parties d'éléments de structure d'un aéronef mais la solution proposée consiste à inclure dans la pièce composite un tissu métallique superficiel.

De cet art antérieur on constate que plusieurs types de solutions sont proposées pour protéger des pièces contre les impacts certaines étant mono matériau d'autres étant bi-matériaux.

Les solutions bi-matériaux comportent selon l'art antérieur un élastomère et un revêtement métallique ou composite.

Ces solutions restent onéreuses et de masse importante, les élastomères rendant en outre la détection des impacts malaisées du fait de leur incompressibilité qui s'oppose à la déformation de la feuille métallique les recouvrant.

Au final, il est nécessaire de mieux préciser les phénomènes mis en jeu et de développer de nouvelles solutions efficaces en termes de résistance aux impacts et compatibles avec les contraintes de mise en œuvre industrielle.

La présente invention a donc pour objectif de définir un système de protection antichoc compatible avec une mise en œuvre industrielle, à savoir :

- une efficacité de la protection mécanique afin de minimiser les risques de dégradations des structures en offrant une résistance à une chute d'outil d'énergie supérieure à 50 joules pour une masse la plus faible possible;
- une fonction de détectabilité de l'occurrence d'impact, ce qui permet de réaliser rapidement un contrôle de l'état de la structure en cas de constat d'impact a posteriori;
- une facilité de mise en œuvre sur pièces, aussi bien en terme de géométrie qu'en terme de simplicité de mise en place.

Pour ce faire la présente invention propose une protection antichoc telle que définie par les revendications.

Cette protection antichoc est caractérisée en ce qu'elle comprend un matériau constitué d'une couche externe métallique adhérente à une sous-couche de matériau cellulaire compressible dans lequel la couche externe métallique est une couche en aluminium ou en alliage d'aluminium et la sous-couche de matériau cellulaire compressible est une sous-couche en mousse néoprène.

Plus particulièrement le matériau de la sous-couche est un matériau compressible par déformation plastique.

La protection antichoc de l'invention est donc un bi-matériau constitué d'une couche externe métallique adhérente à une sous-couche de matériau cellulaire compressible.

La présente invention concerne aussi un procédé d'optimisation de la protection d'une pièce caractérisé en ce qu'on détermine un revêtement de protection antichoc comportant une couche externe métallique adhérente à une sous-couche de matériau cellulaire compressible à déformation plastique selon les étapes suivantes :

- détermination de la raideur de la couche métallique pour augmenter de façon importante la surface concernée par l'impact;
- détermination des épaisseurs de la couche métallique et de la couche de matériau cellulaire compressible pour que, en fonction de l'impact maximal demandé, les déformations du revêtement ne transmettent pas les efforts à la pièce protégée;
- adaptation du revêtement pour que le comportement plastique du revêtement permette d'une part la détectabilité de l'impact, et d'autre part la dissipation de l'énergie incidente.

D'autres caractéristiques et avantages de l'invention seront apparents à la lecture de la description qui suit d'un exemple de réalisation non limitatif de l'invention en référence aux figures qui représentent:

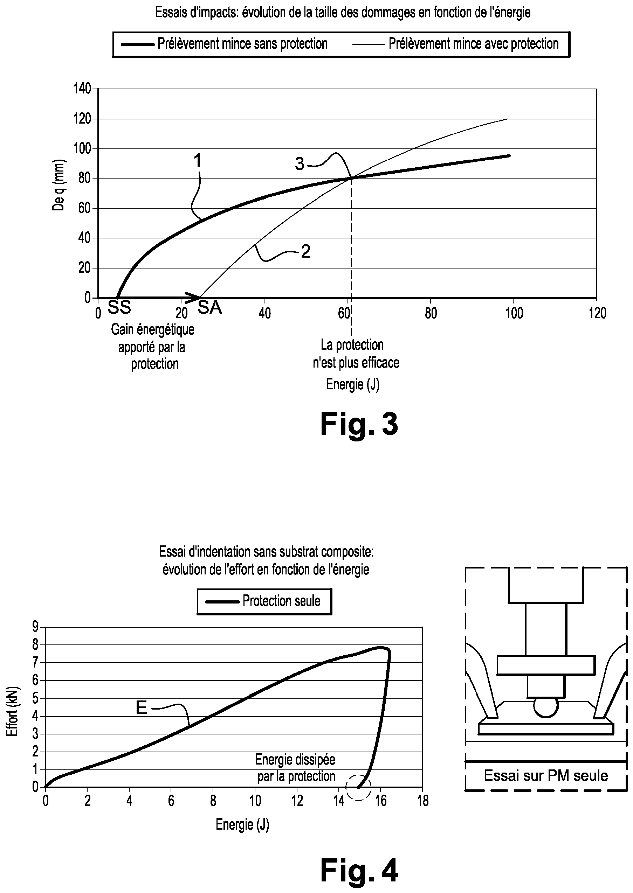

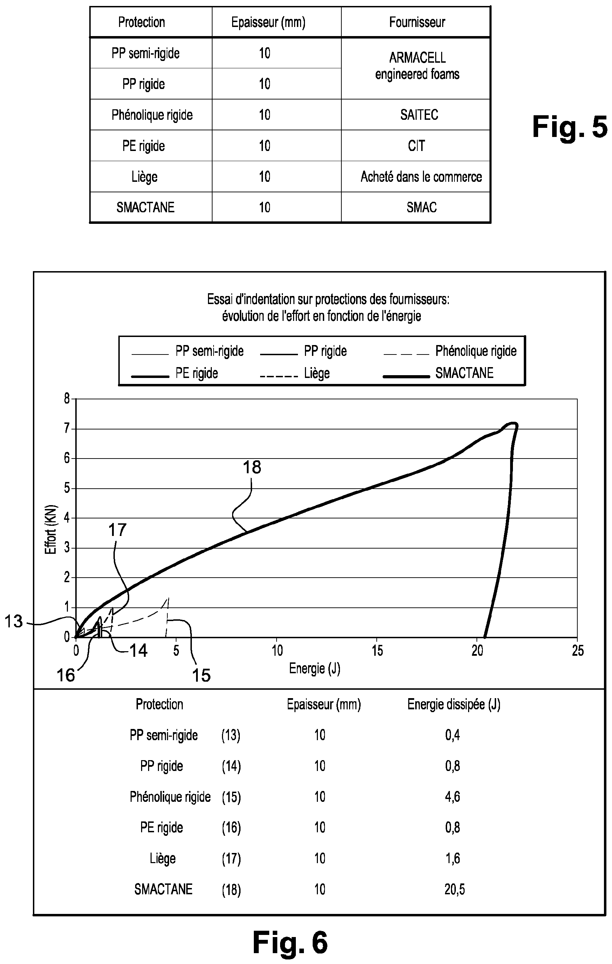

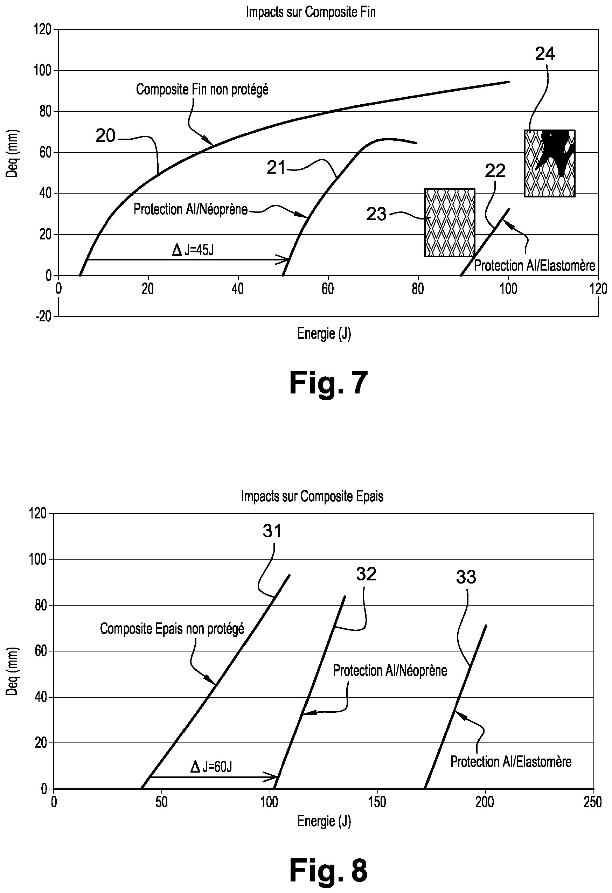

en figure 1: une vue de côté schématique d'un dispositif de test d'impacts;
en figure 2: un dispositif de maintien d'une éprouvette de test;
en figure 3: une courbe déterminant l'évolution des dommages en fonction de l'énergie d'un impact;
en figure 4: une courbe représentant un essai d'indentation d'une protection sans substrat compositie;
en figure 5: un tableau récapitulant plusieurs matériaux de protection testés;
en figure 6: une courbe représentant les courbes représentant l'effort en fonction de l'énergie sur essais d'indentation avec les revêtements de protection utilisant les matériaux de la figure 5;
en figure 7: des courbes d'impacts sur substrat composite fin;
en figure 8: des courbes d'impacts sur substrat composite épais.

Le concept du revêtement bi-matériau de l'invention repose sur les principes suivants :

- l'impact doit être réparti sur une surface la plus importante possible, par l'utilisation d'un matériau métallique raide ;
- le matériau cellulaire doit être suffisamment compressible pour supporter les déformations du revêtement sans transmettre les efforts au composite protégé;
- le comportement plastique du revêtement permet d'une part la détectabilité de l'impact, et contribue également à la dissipation de l'énergie incidente.

Pour réaliser ces fonction l'invention est basée sur une mousse légère qui s'écrase sous les impacts et est pourvu d'une très faible élasticité pour éviter de repousser la couche métallique en fin d'impact ce qui réduirait les capacités de détection d'impact du revêtement.

La mousse est préférablement une mousse à cellules ouvertes.

La possibilité d'utilisation industrielle obtenue est liée à l'usage d'un bi-matériau souple et peu fragile mis en oeuvre par la nature, l'épaisseur, la raideur et la ductilité de la feuille métallique, par la nature, la souplesse, la densité et l'épaisseur du matériau cellulaire qui sont optimisés pour obtenir la masse la plus faible possible, selon la protection aux chocs attendue.

La présente invention s'applique initialement à la protection de toute pièce composite en stockage.

Elle peut évidemment être étendue à toute pièce composite en utilisation et la faible masse du revêtement de protection de l'invention prend alors une importance encore plus grande.

Elle peut aussi être étendue à la protection de toute pièce fragile quelque soit son matériau, métallique, céramique ou verre.

Par ailleurs, le revêtement de protection offre aussi une protection antirayures, et donc une protection au cas mixte rayure/impact.

Pour bien comprendre la nature de la présente invention, il est nécessaire de connaître ce qui se passe quand on impacte un matériau composite et en particulier, le seuil d'énergie de dégradation par impact.

Pour réaliser les essais d'impacts on utilise un outil normalisé représenté à la figure 1.

Cet outil comporte un déclencheur électromagnétique 4 adapté à libérer un obus 5 avec extrémité d'impactage hémisphérique se déplaçant dans un tube d'impact 6 porté par un bâti support 7, 10. L'éprouvette 9 du matériau à tester est disposée sur un cadre 11 comportant une fenêtre d'initialisation 8.

La disposition de l'éprouvette 9 sur le cadre 11 pourvu de la fenêtre 8 est représentée en figure 2.

L'éprouvette est maintenue centrée sur le cadre 11 par des moyens d'appui et de blocage 12 appelés sauterelles. Le cadre 11 est massif afin d'opposer une forte force de réaction à l'impact.

La figure 3, qui représente l'évolution de la taille de dommages en fonction de l'énergie, présente le type de résultat que l'on obtient, quand on impacte avec diverses énergie un matériau réalisé par un prélèvement mince, revêtu ou non par une protection.

La courbe 1 correspond au matériau non revêtu et les dégâts commencent à être apparents pour une énergie SS.

La courbe 2 correspond au matériau revêtu d'une protection et les dégâts commencent à être apparents pour une énergie SA.

Le point de croisement 3 des courbes 1 et 2 correspondent à l'énergie pour laquelle la protection n'est plus efficace

Sur l'axe des ordonnées on a porté la quantité de matière dégradée exprimée en diamètre de cercle moyen dégradé Deq l'axe des abscisses représentant l'énergie de l'impact.

On constate tout d'abord que le matériau composite ne se dégrade qu'au dessus d'un seuil, d'une énergie minimale d'impact SS, ce qui signifie qu'au dessous de cette énergie la pièce conserve ses propriétés mécaniques nominales, testées non plus par contrôle mais par essais mécanique adéquats.

Ensuite on constate qu'une protection peut apporter une augmentation du seuil d'énergie SA à partie duquel le matériau est dégradé.

On quantifiera par la suite l'efficacité d'une protection par le gain de cette énergie $\Delta J$, c'est à dire la différence SA -SS

Il faut également noter que ces seuils dépendent de la géométrie des éprouvettes testées, de leur rayon de courbure et surtout de leur épaisseur.

Pour une éprouvette plane en matériau de type fibre de carbone T800 de la société Toray et résine Epoxy d'une épaisseur de 7 mm ( prélèvement mince dans la suite du texte) le seuil SS comme représenté sur la figure 3 est de 5 joules, alors que pour le même matériau en épaisseur de 14 mm (prélèvement épais dans la suite du texte), ce seuil SS monte à 45 joules.

D'un point de vue phénoménologie, lorsque l'on cherche à protéger un matériau contre un impact, la question se pose de savoir où va passer l'énergie de l'impact. La première idée pour minimiser l'énergie de l'impact susceptible de se dissiper dans le matériau à protéger est d'essayer de faire absorber cette énergie par les protections.

Des essais ont été réalisés pour quantifier cette solution. Pour ce faire on a réalisé des essais de compression sur divers matériaux destinés à réaliser une couche de protection. Il s'agit d'essais de compression en quasi statique effectués sur une machine de traction classique avec une bille de 16 mm représentant le diamètre de l'impacteur.

Les essais correspondent à une charge/décharge réalisée en écrasant un échantillon du matériau, posé sur un substrat très rigide, jusqu'à une compression égale à 95% de l'épaisseur initiale de l'échantillon.

La courbe effort/déformation est exploitée de façon particulière : on intègre au cours de l'essai la courbe de comportement du matériau ce qui permet d'accéder à l'énergie absorbée par le matériau. On porte ensuite sur une courbe l'effort appliqué en fonction de l'énergie absorbée. A la fin de l'essai, on décharge l'éprouvette, ce qui donne accès à l'énergie maximale absorbée par ce matériau.

La figure 4 représente l'évolution de l'effort en fonction de l'énergie dans un essai d'indentation du matériau destiné à réaliser la couche de protection en contact avec le produit à protéger non recouverte de la tôle métallique.

Cette figure définit une courbe générale E que l'on retrouvera dans les composants particuliers testés selon cette méthode.

Divers matériaux ont été approvisionnés, auxquels on demandait les caractéristiques suivantes :

épaisseur variable entre 5 et 20 mm,
densité inférieure à l'unité,
$\varepsilon_R$ allongement à rupture >5%, $\sigma_R$ contrainte à rupture > 2 Mpa,
Contrainte en compression à 10% de déformation > 0.5 MPa,
Contrainte en compression à 50% de déformation > 6 MPa,
Contrainte en compression à 80% de déformation > 100 MPa,

Le tout de façon à avoir un matériau capable d'absorber de l'énergie avec une masse minimale.

La figure 5 fournit un tableau de différents matériaux de l'essai. PP est l'abréviation du polypropylène, PE est l'abréviation du polyéthylène.

Les résultats du test des matériaux est représenté à la figure 6 sur laquelle on a reporté l'évolution de l'effort en fonction de l'énergie pour les différents matériaux testés selon la méthode décrite ci-dessus.

Dans l'ordre croissant d'effort en fonction de l'énergie on trouve le polypropylène semi rigide 13, le polyéthylène rigide 16, le polypropylène rigide, le liège 17, la résine phénolique rigide 15 et le Smactane 18, ce dernier comportant un élastomère combiné à une couche externe métallique.

On a constaté que l'énergie dissipée dans ces matériaux était très faible, largement inférieure au besoin. Le SMACTANE toutefois avait un comportement plus favorable, mais ce matériau a en fait une densité très élevée de l'ordre de 1,3 ce qui le disqualifie pour les usages industriels où l'on recherche un faible poids pour la protection.

La conclusion évidente de ces essais est que les matériaux testés n'ont pas une capacité suffisante d'absorption d'énergie pour réaliser une fonction d'absorption d'impact sauf à avoir une masse trop importante et donc que la solution sous-couche élastique débouche sur une solution peu utilisable et non optimisée.

Par ailleurs, ces essais ont mis en évidences des inconvénients présentés par certains de ces produits : en particulier les mousse rigides sont fragiles, elles s'effritent, sont difficiles à mettre en œuvre pour des géométries complexes et ont une faible durée de vie en milieu industriel.

On constate ainsi que le matériau de la couche inférieure ne peut assurer de protection s'il n'est pas assez dense ce qui conduit à une impasse si l'on veut minimiser le poids de la protection.

pour éviter le recours à un matériau dense, l'invention part du principe que pour éviter la détérioration d'un substrat composite, il faut éviter que le niveau local d'énergie du aux impacts dépasse le seuil admissible par le matériau.

Pour ce faire, l'invention prévoit d'étaler au maximum la zone du matériau concernée par l'impact, tout en évitant que l'impact ne parvienne jusqu'au matériau.

La solution consiste en un produit comprenant deux matériaux liés entre eux par exemple par collage et comprenant une couche externe la plus rigide possible, qui va permettre d'étaler au maximum la zone concernée par l'impact, et une sous couche très facile à écraser qui va permettre d'absorber la déformation de la couche externe et dont l'épaisseur est suffisante pour qu'elle ne soit pas complètement écrasée sous l'impact.

Le produit résultant est optimisé du point de vue de sa masse en fonction de l'énergie maximale de l'impact envisagé, en fonction de l'épaisseur du substrat composite à protéger et en fonction de la souplesse recherchée de l'ensemble selon de la géométrie de la pièce à protéger.

A titre d'exemple, on considère qu'en milieu industriel la probabilité que l'énergie des impacts dus à des chutes d'outil dépasse 50 Joules est très faible.

Une protection doit donc permettre à la pièce protéger de résister à une telle énergie et permettre en tout état de cause de détecter un impact au delà.

Par ailleurs, d'autres exigences pourront être prises en compte. En particulier une couche externe ayant aussi une forte plasticité permettra une mise en évidence de l'impact du fait de l'empreinte qui aura été produite lors de l'impact.

De façon plus détaillée, en ce qui concerne la rigidité de la couche externe, pour étaler au maximum la zone concernée par l'impact, il faut diminuer la flèche de la couche externe soumise à l'impact.

Cette flèche est inversement proportionnelle à l'inertie I de ce revêtement, cette inertie étant elle même proportionnelle au module E du matériau utilisé et au cube de l'épaisseur e de cette couche (I = K*E*e3).

Diminuer la flèche implique donc d'augmenter le module et l'épaisseur de cette couche. Mais optimiser cette couche en termes de masse, c'est choisir un matériau ayant le plus haut module spécifique (module divisé par la densité du matériau), tout en minimisant l'épaisseur de la couche.

L'aluminium et ses alliages, bien connus en aéronautique pour leurs modules spécifiques élevés s'imposent pour cette couche.

Pour la détectabilité de l'impact on choisira parmi les alliages d'aluminium disponibles ceux qui ont un grand allongement à rupture et une grande plasticité pour augmenter de façon importante la surface concernée par l'impact.

De ce fait la couche externe se déformera de manière importante au droit de l'impact et gardera une trace de l'impact. En outre, cette déformation plastique de la couche externe contribuera à l'absorption de l'énergie de l'impact. On obtient ainsi une répartition importante de l'impact sur la surface de la couche externe.

Il est à noter qu'une couche en matériau composite ne conviendrait pas pour cette fonction, car ce type de matériau n'a pas de plasticité. Par contre, un matériau composite peut avoir une raideur spécifique très forte.

Un système de peinture classique de détection d'impact connu sous la marque aerodex ou des films sensibles à la pression comme connus sous la marque PRESSUREX pourront être employée en complément pour améliorer la détectabilité de l'impact.

La couche externe étant choisie avec un module relativement élevée, la seule façon de donner une relative souplesse au revêtement est que la couche externe soit d'une épaisseur la plus faible possible. Cet objectif est atteint simultanément à l'optimisation de la masse du revêtement.

De même, la sous-couche devra aussi être souple si bien que les mousses rigides sont à proscrire et l'invention est basée sur des mousses souples par exemple de type élastomères

La fonction principale de la sous couche est sa capacité d'écrasement : elle doit être maximisée, sachant qu'un écrasement de 95 % est acceptable.

On peut définir un indice d'efficacité Ef de la protection, par le rapport entre le gain en énergie $\Delta J$ mentionné plus haut et la masse surfacique de la protection:

$$E_f = \Delta J/ (e_{sc}*\rho_{sc}+e_c*\rho_c)$$

$e_{sc}$, $\rho_{sc}$ représentent respectivement l'épaisseur et la masse volumique de la sous couche;
$e_c$, $\rho_c$ représentent respectivement l'épaisseur et la masse volumique de la couche externe.

La solution préférentielle est constituée d'une couche externe en alliage d'Aluminium 2024 T3, dont les propriétés sont indiquées ci-dessous .

| Alliage | Densité | E | R02 | Rm | A% |
|---------|---------|------|-----|-----|-----|
| 2024 - T3 | 2,78 | 72400 | 290 | 440 | 14% |

La sous couche est une mousse néoprène de densité 160 Kg/m3, ayant une capacité d'écrasement de 95 %.

Les figures 7 et 8 décrivent les résultats obtenus, pour deux types de matériaux composites, fin ( 7 mm ) et épais ( 14 mm).

A la figure 7 correspondant à une représentation d'impacts sur composites fins, pour chaque matériau, on a porté :

- le comportement du composite seul en courbe 20,
- le comportement avec une protection retenue, composée de 1 mm d'alliage 2024 T3 collé au silicone sur une mousse néoprène de 160Kg/m3 en 9 mm d'épaisseur en courbe 21,
- le comportement avec une protection de 1 mm d'Alliage 2024 T3, collé au Silicone sur un élastomère de densité 1250Kg/m3, en 9 mm d'épaisseur, donc beaucoup plus lourd en courbe 22. ( Le Smactane du commerce).

On constate que la protection combinant une couche externe métallique aluminium adhérente à une sous-couche de mousse cellulaire compressible par déformation plastique, c'est à dire un matériau qui s'écrase sous l'effort avec très peu de retour élastique, en particulier un retour inférieur à 5% de retour lorsque l'effort se relâche, convient parfaitement.

Selon l'invention on adapte la mousse pour obtenir un fort taux de déformation plastique notamment supérieur à 90% en fin de la plage des impacts considérés, l'écrasement de 0 à 90% étant obtenu dans la plage 0 à 50 Joules ou 0 à 100 Joules selon l'application considérée et les impacts dont on souhaite protéger la structure composite.

Pour la plage d'impacts considérée, on dimensionne en outre la sous-couche pour que sa déformation n'atteigne pas sa limite d'incompressibilité conduisant à un transfert d'énergie entre la couche métallique et la pièce protégée.

Notamment, le matériau de la sous couche est déterminé et cette dernière est dimensionnée pour que la plage d'impacts considérée, sa déformation ne conduise pas à un contact entre la couche métallique et la pièce protégée par exemple par déchirement de la sous-couche.

On a représenté en outre les images ultrasons du composite en fonction des impacts et l'image repérée 23 correspond à un composite non altéré par l'impact soit pour une énergie inférieure à 5 Joules pour le composite non protégé, une énergie inférieure à 50 Joules pour le composite protégé selon l'invention et une énergie de 90 Joules pour le composite protégé par une protection utilisant le matériau connu sous la marque SMACTANE.

L'image repérée 24 correspond à un diamètre équivalent de 60 mm, soit une énergie de l'ordre de 30 Joules pour le matériau non protégé, une énergie de l'ordre de 70 Joules pour le matériau protégé selon l'invention et une énergie de l'ordre de 100 Joules pour le matériau protégé par la protection utilisant le SMACTANE.

La figure 8 correspond à une représentation d'impacts sur composites épais et les courbes 30 correspond au comportement du composite seul, 31 au comportement du composite avec la protection retenue pour le produit de l'invention décrit plus haut, 32 le comportement avec la protection de 1 mm d'Alliage 2024 T3, collé au Silicone sur un élastomère de densité 1250Kg/m3, en 9 mm d'épaisseur.

On constate l'effet positif des deux protections qui déplacent le point de départ de la dégradation du produit protégé à 50 joules pour la protection de l'invention et un composite fin comme selon la figure 7 et à 90 Joules pour la protection utilisant un élastomère alors que pour un composite épais la protection de l'invention permet de déplacer le point de départ de la dégradation au delà de 100 Joules comme représenté en figure 8.

On constate bien que la protection à base d'élastomère « lourd » est plus efficace mais la protection Al/élastomère a une masse de 14Kg/m$^2$, alors que la protection Al/mousse néoprène a une masse de 4,2 Kg/m$^2$.

En terme d'indice Ef tel que défini plus haut, l'indice de la protection Al/mousse néoprène selon l'invention varie entre 11 et 15 selon le matériau protégé et celui de la protection Al/Elastomère varie entre 6 et 9 ce qui traduit bien la moindre efficacité massique de la protection Al/Elastomère.

Ceci confirme la validité du principe de l'invention d'utiliser pour la sous couche un matériau non élastique s'écrasant sous l'impact et à forte compressibilité par déformation plastique.

## Revendications

1. Revêtement de protection antichoc comprenant un matériau constitué d'une couche externe métallique adhérente à une sous-couche de matériau cellulaire compressible dans lequel la couche externe métallique est une couche en aluminium ou en alliage d'aluminium et la sous-couche de matériau cellulaire compressible est une sous-couche en mousse néoprène.

2. Revêtement de protection antichoc selon la revendication 1, dans lequel la couche externe métallique est une couche en alliage d'aluminium, ledit alliage d'aluminium étant choisi parmi les alliages d'aluminium à grand allongement en rupture et grande plasticité.

3. Revêtement de protection antichoc selon la revendication 2, dans lequel l'alliage d'aluminium est l'alliage d'aluminium 2024 T3.

4. Revêtement de protection antichoc selon l'une quelconque des revendications précédentes, dans lequel la mousse néoprène est choisie parmi les mousses néoprène ayant une masse volumique de 160 Kg/m$^3$ et une capacité d'écrasement d'au moins 95%, par exemple de 95%.

## Patentansprüche

1. Stoßschutzbeschichtung, enthaltend ein Material, das aus einer metallischen Außenschicht besteht, die an einer Unterschicht aus komprimierbarem Zellmaterial haftet, wobei die metallische Außenschicht eine Schicht aus Aluminium oder Aluminiumlegierung ist und die Unterschicht aus komprimierbarem Zellmaterial eine Unterschicht aus Neoprenschaum ist.

2. Stoßschutzbeschichtung nach Anspruch 1, wobei die metallische Außenschicht eine Schicht aus Aluminiumlegierung ist, wobei die Aluminiumlegierung ausgewählt ist aus Aluminiumlegierungen mit hoher Bruchdehnung und hoher Plastizität.

3. Stoßschutzbeschichtung nach Anspruch 2, wobei die Aluminiumlegierung die Aluminiumlegierung 2024 T3 ist.

4. Stoßschutzbeschichtung nach einem der vorangehenden Ansprüche, wobei der Neoprenschaum ausgewählt ist aus Neoprenschäumen mit einer Dichte von 160 kg/m$^3$ und einem Quetschvermögen von mindestens 95 %, beispielsweise 95 %.

**Claims**

1. A shockproof protective coating comprising a material consisting of a metal outer layer adhering to a compressible cellular material sub-layer, wherein the metal outer layer is a layer made of aluminium or of an aluminium alloy and the compressible cellular material sub-layer is a sub-layer made of a neoprene foam.

2. The shockproof protective coating according to claim 1, wherein the metal outer layer is a layer made of an aluminium alloy, said aluminium alloy being selected from high elongation at break and high plasticity aluminium alloys.

3. The shockproof protective coating according to claim 2, wherein the aluminium alloy is the aluminium alloy 2024 T3.

4. The shockproof protective coating according to any one of the preceding claims, wherein the neoprene foam is selected from neoprene foams having a density of 160kg/m$^3$ and a crushability of at least 95%, for example 95%.

**Fig. 1**

4

5

6

7

9

8

11 10

**Fig. 2**

9

12

11

8

Essais d'impacts: évolution de la taille des dommages en fonction de l'énergie

| Prélèvement mince sans protection | Prélèvement mince avec protection |

## Fig. 3

Essai d'indentation sans substrat composite:
évolution de l'effort en fonction de l'énergie

| Protection seule |

## Fig. 4

| Protection | Epaisseur (mm) | Fournisseur |
|---|---|---|
| PP semi-rigide | 10 | ARMACELL engineered foams |
| PP rigide | 10 | |
| Phénolique rigide | 10 | SAITEC |
| PE rigide | 10 | CIT |
| Liège | 10 | Acheté dans le commerce |
| SMACTANE | 10 | SMAC |

**Fig. 5**

Essai d'indentation sur protections des fournisseurs:
évolution de l'effort en fonction de l'énergie

| ——— PP semi-rigide | ——— PP rigide | — — — Phénolique rigide |
|---|---|---|
| ——— PE rigide | - - - - - Liège | ——— SMACTANE |

| Protection | | Epaisseur (mm) | Energie dissipée (J) |
|---|---|---|---|
| PP semi-rigide | (13) | 10 | 0,4 |
| PP rigide | (14) | 10 | 0,8 |
| Phénolique rigide | (15) | 10 | 4,6 |
| PE rigide | (16) | 10 | 0,8 |
| Liège | (17) | 10 | 1,6 |
| SMACTANE | (18) | 10 | 20,5 |

**Fig. 6**

Fig. 7

Fig. 8

**EP 2 313 266 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2861847
- FR 2869871
- FR 2869565
- FR 2771331